## Europäisches Patentamt
## European Patent Office
## Office européen des brevets

(19)

(11) Publication number : **0 404 723 B1**

(12)

# EUROPEAN PATENT SPECIFICATION

(45) Date of publication of patent specification :
**10.08.94 Bulletin 94/32**

(51) Int. Cl.⁵ : **C08L 3/02, C08L 57/10, C08L 29/00**

(21) Application number : **90810434.2**

(22) Date of filing : **14.06.90**

(54) **Polymer base blend compositions containing destructurized starch.**

(30) Priority : **19.06.89 US 368486**
**02.11.89 US 431715**

(43) Date of publication of application :
**27.12.90 Bulletin 90/52**

(45) Publication of the grant of the patent :
**10.08.94 Bulletin 94/32**

(84) Designated Contracting States :
**AT BE CH DE DK ES FR GB GR IT LI LU NL SE**

(56) References cited :
**EP-A- 0 400 532**
**GB-A- 2 190 093**
**IND. ENG. CHEM. PROD. RES. DEV., vol. 23, 1984, pages 594-595; B.T. NWUTO etal.: "Extrusion of starch-extended water-soluble polyvinyl alcohol"**

(73) Proprietor : **WARNER-LAMBERT COMPANY**
**201 Tabor Road**
**Morris Plains New Jersey 07950 (US)**

(72) Inventor : **Sachetto, Jean-Pierre, Dr.**
**Duechelweiher 13**
**CH-4144 Arlesheim (CH)**
Inventor : **Lentz, David John, Dr.**
**23 Timber Lane**
**Randolph, New Jersey 07869 (US)**
Inventor : **Silbiger, Jakob, Dr.**
**Oberwilerstrasse 72**
**CH-4054 Basel (CH)**

(74) Representative : **Silbiger, Jakob**
**c/o André Braun**
**European Patent Attorney**
**Murtengasse 5**
**CH-4051 Basel (CH)**

EP 0 404 723 B1

## Description

The present invention relates to polymer compositions capable of being formed by heat and pressure into articles having dimensional stability and enhanced physical properties, and to pre-mixes useful for preparing these compositions. These compositions and pre-mixes comprise destructurized starch and other polymers as described herein.

It is known that natural starch which is found in vegetable products and which contains a defined amount of water can be treated at an elevated temperature and in a closed volume, thereby at elevated pressures, to form a melt. The process is conveniently carried out in an injection molding machine or extruder. The starch is fed through the hopper onto a rotating, reciprocating screw. The feed material moves along the screw towards the tip. During this process, its temperature is increased by means of external heaters around the outside of the barrel and by the shearing action of the screw. Starting in the feed zone and continuing in the compression zone, the particulate feed becomes gradually molten. It is then conveyed through the metering zone, where homogenization of the melt occurs, to the end of the screw. The molten material at the tip can then be treated further by injection molding or extrusion or any other known technique to treat thermoplastic melts, to obtain shaped articles.

This treatment, which is described in the European Patent Application No. 84 300 940.8 (Publication No. 118 240) which patent is incorporated herein by reference, yields an essentially destructurized starch. As described in the above mentioned patent, the reason for this is that the starch is heated above the glass transition and the melting temperatures of its components. As a consequence, a melting and disordering of the molecular structure of the starch granules takes place, so that an essentially destructurized starch is obtained. The expression "destructurized starch" defines starch obtained by such thermoplastic melt formation. Reference is also made to European Patent Applications No. 88810455.1 (Publication No. 298,920), No. 88810548.3 (Publication No. 304,401) and No. 89810046.6 (Publication No. 326,517) which further describe destructurized starch, methods for making it, and uses of it. These application are also incorporated herein by reference.

It is preferred that the destructurized starch used in the present invention has been heated to a high enough temperature and for a time long enough so that the specific endothermic transition analysis as represented by differential scanning calorimetry (DSC) indicates that a specific relatively narrow peak just prior to oxidative and thermal degradation has disappeared, as described in the above-mentioned European Patent Application No. 89810046.6 (Publication No. 326 517).

Destructurized starch is a new and useful material for many applications. An important property is its biodegradability. In humid air, however, destructurized starch takes up water from the air, thereby increasing its moisture content. As a consequence, a shaped article made from destructurized starch may under such conditions lose its dimensional stability. On the other hand such an article may dry out in low humidity and become brittle.

Thermoplastic starch has unique properties and while these are very useful, they may limit its utility in cases where a softer, more resilient or harder, tougher polymer is desired.

Thermoplastic starch as mentioned can be extruded and molded into numerous useful shapes and profiles. However, the processing parameters such as water content, temperature, and pressure are generally critical and must be narrowly controlled to achieve reproducible quality products. This is a further disadvantage for many applications.

To overcome these potential limitations, it would be useful to increase the dimensional stability over a wide humidity range; to increase the toughness (measured as break energy); to increase the elasticity (measured as elongation); to decrease polymer stiffness (measured as Young's modulus) and increase the hardness.

Broadening processing latitude increases the variety of shapes and composites and decreases the need for close controls. It would therefore also be useful to improve the control of the melt strength, e.g. increasing the processing latitude for extruding, injection molding, film blowing or fiber drawing and to control the surface tack and adhesion to other substrates.

Conventional thermoplastic materials are hydrophobic, substantially water-insoluble polymers which are conventially processed in the absence of water and volatile materials. Starch to the contrary forms a melt in the presence of water but decomposes at elevated temperature, i.e. around 240°C. It was therefore expected that such a starch melt could not be used as a thermoplastic component together with hydrophobic, substantially water-insoluble polymeric materials not only because starch forms a melt in the presence of water as described above, but also because of its chemical structure and hydrophilic nature.

It has now been found that starch, when heated in a closed volume at proper moisture and temperature conditions, as described above, to form a melt of destructurized starch, is substantially compatible in its processing with melts formed by hydrophobic substantially water insoluble thermoplastic polymers and that the two types of molten materials show an interesting combination of properties, especially after the melt has solidified.

One very important aspect is the surprisingly improved dimensional stability of such destructurized starch blended with such hydrophobic thermoplastic materials. Such polymer compositions are described in copending European Patent Application No. 89810078.9 (Publication No. 327,505) which is incorporated herein by reference. Although articles made from such compositions possess better dimensional stability than those made from destructurized starch alone, the physical properties of the therein-described compositions are not as good as might be desired for some end uses. In particular, it is important that articles made from destructurized starch compositions retain sufficient strength and dimensional stability to perform their desired function while still being biodegradable after disposal.

It has now been found that articles made from such destructurized starch blended with specific hydrophobic thermoplastic materials as described herein show a surprising increase in all or a part of their physical properties and behaviour of their melts as to overcome the limitations as explained above. Moreover it was surprisingly found that many of the blends described herein show a significantly improved dimensional stability in humid air compared with non-blended destructurized starch whilst retaining a surprisingly high degree of disintegration in contact with moisture water which in consequence leads to a high degree of biodegradability.

EP-A-0 118 240 as mentioned above discloses destructurized starch and a method for its production. Ind. Eng. Chem. Prod. Dev., Vol. 23, 1984, p. 594-595 discloses mixtures of starch with polyvinylalcohol. GB-A-2 190 093 refers to moldable starch compositions comprising destructurized starch. The teaching of this document refers to particulate, free-flowing starch based formulations. EP-A-0 400 532, claiming a priority of May 30, 1989, published December 5, 1990, refers to compositions comprising destructurized starch and ethylene-vinylalcohol copolymers. Stärke, 36, 1984, July, No. 7, pages 228-231, refers to the extrusion of starch with twin-screw extruders. EP-A-0 327 505, claiming a priority of February 3, 1988, published August 9, 1989, refers to compositions comprising destructurized starch and at least one substantially water-insoluble synthetic thermoplastic polymer. BE-654605 refers to the processing of amylose. EP-A-0 282 451 teaches the improved production of destructurized starch by the addition of a chain scission catalyst, for examples an inorganic acid or base. None of the documents mentioned above refer to compositions comprising the three components a), b) and c) as disclosed herein according to the present invention.

In order to achieve such properties, it has been found useful to make polymer compositions comprising: a) destructurized starch, b) at least one polymer which contains at least two different types of functional groups, one of said types being hydroxyl groups (referred to herein as "component b)"), and optionally c) a substantially water-insoluble polymer different from those defined as component b). In one aspect, the present invention relates to a composition comprising destructurized starch and component b). This composition is useful itself for making finished articles, but it is primarily useful as a "pre-mix" for combining with the substantially water-insoluble polymer. In a second aspect, the invention comprises the ternary composition of destructurized starch, component b), at least one substantially water-insoluble polymer (component c)). These compositions may be in the form of powdery mixtures of the components, melts, or solid forms. The invention also includes methods for making and using both above-described compositions and shaped articles made therefrom.

Specifically the present invention refers to a composition consisting of

a) destructurized starch produced by heating a starch having a water content of 5 to 40% by weight based on the starch/water component, in a closed volume under shear; and at a temperature of 120°C to 190°C above the glass transition and the melting points of its components and at a pressure of up to 150 x 10$^5$ N/m$^2$ to form a melt whereby the pressure corresponds at a minimum to the vapour pressure of water at the temperature used and heating the melt for a time long enough to obtain a melting of the molecular structure of the starch granules and a homogenization of the melt;

b) at least one copolymer selected from the group consisting of poly(vinyl alcohol-co-vinyl acetate), ethylene/vinyl alcohol/-vinyl acetate copolymers, ethylene/vinyl chloride/vinyl alcohol/vinyl acetate graft copolymers, vinyl alcohol/vinyl acetate/vinyl chloride copolymers, vinyl alcohol/vinyl acetate/vinyl chloride/diacryl amide copolymers, vinyl alcohol/ vinyl butyral copolymers, vinyl alcohol/vinyl acetate/vinyl pyrrolidone copolymers wherein the vinylalcohol units are present in an amount of 20 mol% to 99 mol%;

c) a thermoplastic polymer which undergoes melt formation at a set processing temperature within the range of 95°C to 190°C and is selected from (i) the group consisting of polyethylenes, polypropylenes, polyisobutylenes, polystyrenes, polyacrylonitriles, poly(vinylcarbazols), polyacrylates, polymethacrylates, poly(vinyl chloride), poly(vinyl acetate), polyamides, thermoplastic polyesters, thermoplastic polyurethanes, polycarbonates, poly(alkylene terephthalates), or (ii) the group consisting of ethylene vinyl acetate copolymers, ethylene/vinyl alcohol copolymers, ethylene/acrylic acid copolymers, ethylene/ethyl acrylate copolymers, ethylene/methacrylate copolymers, ABS-copolymers, styrene/acrylonitrile copolymers, ethylene/maleic acid anhydride copolymers and mixtures thereof; and

d) optionally one or more materials selected from the group consisting of fillers, lubricants, mold release agents, plasticizers, foaming agents, stabilizers, flow accelerators, coloring agents, pigments and mixtures thereof;

wherein the component b) is present in an amount of 1% to 50% by weight of the total composition; and wherein the sum of the components b) and c) constitutes 10% to 80% by weight of the total composition.

The present invention includes said polymer compositions in the form of powdery mixtures of their components, in the form of melts, or in solidified form.

Component b) is chosen as described herein to be substantially compatible with the starch and also to promote the compatibility of component c) with the combination of starch and component b).

The present invention further refers to a method of producing said polymer compositions in the molten or solid form as well as a method of producing shaped articles from said polymer compositions, and to the resulting shaped articles made therefrom.

The polymer compositions of the present invention are prepared by admixing destructurized starch, component b), and optionally component c) and any further additives. This mixture is then heated in a closed volume to elevated temperatures until a homogeneous melt is obtained, and shaped articles can be formed therefrom.

An alternate method of producing the polymer compositions of the present invention comprises: Heating starch, which is in a condition to be destructurized, in a closed volume to elevated temperatures and at elevated pressures for a time sufficient to destructurize the starch and form a melt; adding component b) as well as other polymers and/or additives before, during or after such starch destructurization; and continuing to heat the mixture until a homogenous melt is obtained. It is preferred that component b) and, if desired, component c), as well as other additives be combined with the starch and the combination formed into a melt. The starch in this combination may be already wholly or partially destructurized or the destructurization may take place during melt formation.

The present invention further refers to the process of working said polymer composition under controlled water content, temperature and pressure conditions as a thermoplastic melt wherein said working process is any known process, such as, for example injection molding, blow molding, extrusion, coextrusion, compression molding, vacuum forming, thermoforming or foaming. All of these processes are collectively referred to herein as "forming".

The term "starch" as used herein includes chemically substantially non-modified starches as for example carbohydrates of natural, vegetable origin, composed mainly of amylose and/or amylopectin. They can be extracted from various plants, examples being potatoes, rice, tapioca, corn (maize), pea, and cereals such as rye, oats and wheat. Preferred is starch made from potatoes, corn, wheat or rice. Mixtures of starch obtained from these sources are contemplated. It further includes physically modified starches such as gelatinized or cooked starches.

As described above, it has been found that starches, e.g. with a water content within the range of about 5 to about 40% by weight based on the weight of the composition, undergo a specific narrow endothermic transition on heating to elevated temperatures and in a closed volume just prior to the endotherm change characteristic of oxidative and thermal degradation. The specific endothermic transition can be determined by differential scanning calorimetric analysis (DSC) and is indicated on the DSC-diagram by a specific relatively narrow peak just prior to the endotherm characteristic of oxidative and thermal degradation. The peak disappears as soon as the mentioned specific endothermic transition has been undergone. The term "starch" includes also treated starches wherein said specific endothermic transition has been undergone. Such starch is described in the EP 89810046.6 (Publication No. 326,517).

Although at the current time, destructurization of starch requires the presence of water in ranges disclosed herein, the present inventive compositions also contemplate the use of destructurized starch prepared by other methods, e.g. without the use of water.

The water content of such a starch/water composition is preferably about 5 to about 40 % water by weight of the starch/water component and preferably about 5 to about 30 %. However, in order to work with the material near its equilibrium water content to which it gets when it is finally exposed to the free atmosphere, a water content of about 10 to about 22 %, preferably of about 14 to about 18 % by weight calculated based on the starch/water component should be used in processing and is preferred.

The polymer of component b) is preferably a polymer containing vinyl alcohol units. More preferably component b) is a poly(vinyl ester) wherein the ester groups are partially hydrolyzed or a copolymer containing vinyl alcohol units.

These polymers of component b) have preferably from about 20 to about 99 mol % hydroxyl containing units such as vinyl alcohol units, preferably from about 30 to about 99 mol % and most preferably from about 40 to about 95 mol % of the hydroxyl containing unit, the remaining units being as mentioned above.

The polymers of component b) may have a general formula wherein the number of repeating units varies for each individual type of copolymer and is known per se as e.g. described in "Encyclopaedia of Polymer Science and Technology, Interscience Publ. Vol. 14, 1971." The molecular weight of the copolymer may be within known ranges.

Preferred copolymers of the component b) are those which can be described as containing vinyl alcohol (I) units together with vinyl ether (II) and/or vinyl ester (III) units.

These preferred copolymers of component b) are copolymers as obtained by polymerization of a vinyl ester with one or more monomers selected from the group consisting of ethylene, vinyl ethers, with subsequent hydrolysis of at least some of the vinyl ester groups.

Such preferred copolymers of component b) are e.g. polyvinylalcohol-co-vinyl-acetate; ethylene/ vinyl alcohol/vinyl acetate copolymers; ethylene/ vinyl chloride/vinyl alcohol/vinyl acetate graft copolymers; vinyl alcohol/vinyl acetate/vinyl chloride copolymers; vinyl alcohol/vinyl acetate/vinyl chloride/ diacryl amide copolymers; vinyl alcohol/vinyl butyral copolymers; vinyl alcohol/vinyl acetate/ vinyl pyrrolidone copolymers. Combinations or mixtures of these copolymers are included within the scope of component b).

As mentioned above, the polymer composition comprising the components a) and b) optionally contains one or more essentially water-insoluble hydrophobic polymers (component c), as well as further additives.

The component c) is an essentially water-insoluble polymer or a mixture of such essentially water-insoluble polymers. Component c) is preferably present in an amount effective to enhance the physical properties of articles made from the composition of the invention.

As used herein an "essentially water-insoluble thermoplastic polymer" is a polymer which preferably absorbs water at a rate of less than 10 %, preferably less than 5 % per 100 grams of the polymer at room temperature and preferably at a rate of less than 2 % per 100 grams of the polymer at room temperature.

Examples of essentially water-insoluble thermoplastic materials are polyethylene (PE), polyisobutylenes, polypropylenes; vinyl polymers such as poly(vinyl chloride) (PVC), poly(vinyl acetates); polystyrenes; polyacrylonitriles (PAN); poly(vinyl carbazoles) (PVK); essentially water-insoluble polyacrylates or polymethacrylates; polyacetals; thermoplastic polycondensates such as polyamides (PA), polyesters, polyurethanes, polycarbonates, poly(alkylene terephthalates); as well as their copolymers.

Further included are essentially water-insoluble thermoplastic copolymers known such as alkylene/vinyl ester-copolymers preferably ethylene/vinyl acetate-copolymers (EVA); ethylene/vinyl alcohol-copolymers (EVAL); alkylene/acrylates or methacrylate copolymers preferably ethylene/acrylic acid-copolymers (EAA); ethylene/ethyl acrylate-copolymers (EEA); ethylene/methyl acrylate-copolymers (EMA); ABS-copolymers; styrene/acrylonitrile-copolymers (SAN); alkylene/maleic anhydride copolymer preferably ethylene/ maleic anhydride copolymer; and mixtures thereof.

Preferred from these are those which undergo melt formation at a set processing temperature preferably within the range of 95°C to 190°C.

Preferred from these are further those polymers containing polar groups such as ether, acid, ester, amide, or urethane groups. Such polymers include e.g. ethylene/vinyl acetate-copolymers (EVA), ethylene/vinyl alcohol-copolymers (EVAL), ethylene/acrylic acid-copolymers (EAA),ethylene/ ethyl acrylate-copolymers (EEA), ethylene/methacrylate- copolymers (EMA), styrene/acrylonitrile-copolymers (SAN); as well as their mixtures.

Most preferred are those polymers containing one type of functional group which is the same type of functional group as that of component b) which is not hydroxyl.

Such essentially water-insoluble thermoplastic polymers may be added in any desired amount as described herein.

Such polymers may be used in any known form. Their molecular weight is also generally known in the art. It is also possible to use such polymers of relatively low molecular weight (oligomers). Which molecular weight to chose is a matter of optimization and known to the one skilled in the art.

In the composition according to this invention, the two components a) and b) or the three components a), b) and c) always add up to 100 % and the values of the components (in %) given hereinbelow refer to this sum of 100 %.

The ratio of destructurized starch to the component b) and optionally to the sum of the components b) and c) can be 1:99 to 99:1. It is however preferred that the destructurized starch contributes noticeably to the properties of the final material. Therefore, it is preferred that the destructurized starch is present in an amount of at least 20%, more preferably 50% and most preferably in the range of 70% to 99% by weight of the entire composition. That is, component b) is and optionally the sum of the components b) and c) are present in amounts of 80% or less, more preferably less than or equal to 50% and most preferably in the range of 30% to 1% by weight of the entire composition.

Component b) is a relatively polar material. When it functions in the present compositions in combination with component c), it is able to mix more readily with a more polar component c) than with a less polar one.

Accordingly, with more polar components c), relatively less of component b) will be required than with less polar ones. The skilled worker will be able to select appropriate ratios of components b) and c) to obtain a substantially homogenous melt composition.

A mixture of 1 to 15% by weight of the components b) or optionally of the sum of the components b) and c) and 99 to 85% of the destructurized starch shows already a significant improvement in the properties of the obtained materials. For certain applications a ratio of said components b) or optionally of the sum of the components b) and c) to the destructurized starch component of 1-10% to 99-90% by weight is preferred. If the destructurized starch contains water, the percentage of this destructurized starch component is meant to be the destructurized starch/water component, i.e. including the weight of water.

The starch may be mixed with the additives as named hereinbelow to yield a free flowing powder useful for continuous processing and is destructurized and granulated before it is mixed with the components b) and optionally c) or the other optionally added components. The other components to be added are preferably granulated to an equal granular size as the granulated destructurized starch.

However, it is possible to process native starch or pre-extruded and/or destructurized granulated or powdered starch together with powdered or granulated additives and/or the polymeric material in any desired mixture or sequence.

Thus, it is preferred that the components a), b) and c) and the additives be mixed in a conventional mixer. This mixture can then be passed through an extruder to produce granulates or pellets as one form of shaped articles useful for further processing. However, it is possible to avoid granulating and to process the obtained melt directly using down-stream equipment to produce films, blown films included, sheets, profiles, pipes, tubes, foams or other shaped articles. The sheets can be used for thermoforming.

It is preferred that the fillers, lubricants and/or plasticizers are added to the starch before destructurization while the addition of the coloring agents as well as of the components b), c) and the other additives can be added before, during or after destructurization.

The essentially destructurized starch/water component or granules have a preferred water content in the range of 10 to 22 % by weight of the starch/water component, preferably 12 to 19% and especially 14 to 18% by weight of the starch/water component.

The water content described above refers to the percentage of water relative to the weight of the starch/water component within the total composition and not to the weight of the total composition itself, which would include also the weight of any added essentially water-insoluble thermoplastic polymer.

In order to destructurize the starch and/or to form a melt of the new polymeric composition according to this invention, it is suitably heated in a screw and barrel of an extruder for a time long enough to effect destructurization and melt formation. The temperature is preferably within the range of 130°C to 190°C depending on the type of starch used. For this destructurizing and melt formation, the composition is heated preferably in a closed volume. A closed volume can be a closed vessel or the volume created by the sealing action of the unmolten feed material as happens in the screw and barrel of injection molding or extrusion equipment. In this sense the screw and barrel of an injection molding machine or an extruder is to be understood as being a closed vessel. Pressures created in a closed vessel correspond to the vapour pressure of water at the used temperature but of course additional pressure may be applied and/or generated as normally occurs in a screw and barrel. The preferred applied and/or generated pressures are in the range of pressures which occur in extrusion and are known per se, e.g. from 5 to $150 \times 10^5$ N/m$^2$ preferably from 5 to $75 \times 10^5$ N/m$^2$ and most particularly from 5 to $50 \times 10^5$ N/m$^2$. If the thus-obtained composition is just destructurized starch, it may be granulated and ready to be mixed with the further components according to a chosen mixing and processing procedure to obtain the granular mixture of the destructurized starch/polymer starting material to be fed to the screw barrel.

However, the obtained melt in the screw and barrel may be e.g. injection molded directly into a suitable mold, i.e. directly further processed to a final product if all necessary components are already present.

Within the screw, the granular mixture obtained as described above is heated to a temperature which is generally within the range of 120°C to 220°C and especially within the range of 130°C to 190°C. Preferably, such mixture is heated to a sufficiently high temperature and for a time long enough until the endothermic transition analysis (DSC) indicates that the specific relatively narrow peak just prior to the endotherm characteristic of oxidative and thermal degradation of starch has disappeared.

The minimum pressures under which the melts are formed correspond to the water vapour pressures produced at said temperatures. The process is carried out in a closed volume as explained above, i.e. in the range of the pressures which occur in extrusion or molding processes and known per se, e.g. from zero to $150 \times 10^5$ N/m$^2$ preferably from zero to $75 \times 10^5$ N/m$^2$ and most particularly from zero to $50 \times 10^5$ N/m$^2$.

When forming a shaped article by extrusion the pressures are preferably as mentioned above. If the melt according to this invention is, e.g., injection molded, the normal range of injection pressures used in injection molding is applied, e.g. from $300 \times 10^5$ N/m$^2$ to $3000 \times 10^5$ N/m$^2$ and preferably from $700 \times 10^5$ to $2200 \times 10^5$ N/m$^2$.

Accordingly, the present invention provides a thermoplastic destructurized starch product formed by the process comprising:

1) providing a mixture consisting of:
- a starch composed mainly of amylose and /or amylopectin and having a water content of from 5% to 40% by weight;
- at least one polymer as defined above as component b);
- a thermoplastic polymer as defined above as component c);

wherein the component b) is present in an amount of 1% to 50% by weight of the total composition; and wherein the sum of the components b) and c) constitutes 10% to 80% by weight of the total composition;

2) heating said mixture in the screw and barrel of an injection molding machine or an extruder at a temperature of 120°C to 190°C and at a pressure of up to $150 \times 10^5$ N/m$^2$ to form a melt and heating the melt for a time long enough to obtain a destructurization of the starch and a homogenization of the melt ;

3) shaping the melt into an article; and

4) allowing the shaped article to cool to a solidified dimensionally stable article.

Various hydrophilic polymers may be used as additives. These include water-soluble and water-swellable polymers. As such it includes animal gelatin, vegetable gelatins resp. proteins such as sunflower protein, soybean proteins, cotton seed proteins, peanut proteins, rape seed proteins, acrylated proteins; water-soluble polysaccharides, alkylcelluloses, hydroxyalkylcelluloses and hydroxyalkylalkylcelluloses, such as: methylcellulose, hydroxymethylcellulose, hydroxyethylcellulose, hydroxypropylcellulose, hydroxyethylmethylcellulose, hydroxpropylmethylcellulose, hydroxybutylmethylcellulose, cellulose esters and hydroxyalkylcellulose esters such as: cellulose acetylphtalate (CAP), Hydroxypropylmethylcellulose (HPMCP); carboxyalkylcelluloses, carboxyalkyl-alkylcelluloses, carboxyalkylcellulose, analogous known polymers made from starch; carboxymethylcellulose and their alkalimetal salts; water-soluble or water-swellable synthetic polymers such as: polyacrylic acids and polyacrylic acid esters, polymethacrylic acids and polymethacrylic acid esters, polyvinylalcohols, polyvinylacetatephthalates (PVAP), polyvinylpyrrolidone, polycrotonic acids; polyitaconic acid, polymaleic acid; suitable are also phthalated gelatin, gelatin succinate, crosslinked gelatin, shellac, cationically modified acrylates and methacrylates possessing, for example, a tertiary or quaternary amino group, such as the diethylaminoethyl group, which may be quaternized if desired; and other similar polymers.

Preferred are synthetic polymers, most preferred are synthetic polymers such as polyacrylic acids, polyacrylic acid esters, polymethacrylic acids, polymethacrylic acid esters, polyvinyl alcohols, polyvinyl pyrrolidone.

Such hydrophilic polymers may optionally be added up to 50 % based on the starch/water component, preferably up to 30 % and most preferably between 5% and 20% based on the starch/water component. If any hydrophilic polymer is added, its mass should be considered along with the starch in determining the appropriate amount of water in the composition.

Other useful additives may be e.g. adjuvants, fillers, lubricants, mold release agents, plasticizers, foaming agents, stabilizers, coloring agents, pigments, extenders, chemical modifiers, flow accelerators, and mixtures thereof.

Examples for fillers are inorganic fillers, such as the oxides of magnesium, aluminum, silicon, titanium, etc. preferably in a concentration in the range of 0.02 to 50 % by weight preferably 0.20 to 20 % based on the total weight of all the components.

Examples for lubricants are stearates of aluminum, calcium, magnesium and tin as well as talc, silicones, etc. which may be present in concentrations of 0.1 - 5% preferably at 0.1 - 3% based upon the weight of the total composition.

Examples of plasticizers include low molecular poly(alkylene oxides), such as poly(ethylene glycols), poly(propylene glycols), poly(ethylene-propylene glycols); organic plasticizers of low molar masses, such as glycerol, pentaerythritol, glycerol monoacetate, diacetate or triacetate; propylene glycol, sorbitol, sodium diethylsulfosuccinate, etc., added in concentrations ranging from 0.5 to 35%, preferably ranging from 0.5 to 10 % based on the total weight of all the components. Examples of colouring agents include known azo dyes, organic or inorganic pigments, or colouring agents of natural origin. Inorganic pigments are preferred, such as the oxides of iron or titanium, these oxides, known per se, being added in concentrations ranging from 0.001 to 10%, preferably 0.5 to 3%, based on the weight of all the components.

There may further be added compounds to improve the flow properties of the starch material such as animal or vegetable fats, preferably in their hydrogenated form, especially those which are solid at room temperature. These fats have preferably a melting point of 50°C or higher. Preferred are triglycerides of $C_{12}$ -, $C_{14}$ -, $C_{16}$ -, and $C_{18}$ - fatty acids.

These fats can be added alone without adding extenders or plasticizers.

These fats can advantageously be added alone or together with mono- and/or diglycerides or phosphatides, especially lecithin. The mono- and diglycerides are preferably derived from the types of fats described above, i.e. from $C_{12}$ -, $C_{14}$ -, $C_{16}$ -, and $C_{18}$ - fatty acids.

The total amount of fats, mono-, diglycerides and/or lecithins used are up to 5% and preferably within the range of 0.5 to 2% by weight of the total weight of starch and any added hydrophilic polymer.

The materials may further contain stabilizers, such as antioxydants, e.g. thiobisphenols, alkylidenbisphenols secondary aromatic amines; light stabilizers such as UV-absorbers and UV-quenchers; hydroperoxide decomposer; free-radical scavengers; stabilizers against microorganisms.

The compositions of the invention form thermoplastic melts on heating and in a closed volume, i.e. under conditions of controlled water-content and pressure. Such melts can be processed just like conventional thermoplastic materials, using, for example, conventional apparatus for injection molding, blow molding, extrusion and coextrusion (rod, pipe and film extrusion), compression molding, foaming, to produce known articles. The articles include bottles, sheets, films, packaging materials, pipes, rods, laminated films, sacks, bags, pharmaceutical capsules, granules, powders or foams.

For example, these compositions may be used to prepare low density packaging materials (e.g. foams) by well-known methods. Conventional blowing agents may be utilized if desired or, for certain compositions, the water itself may act as the blowing agent. Open cell and closed cell foams may be produced as desired by varying the composition and processing condtions. These foams produced from the present compositions will demonstrate improved properties (e.g., dimensional stability, moisture resistance, etc.) when compared with foams made of starch without incorporation of the components b) and c) according to this invention.

These compositions may be used as carrier materials for active substances, and may be mixed with active ingredients such as pharmaceuticals and/or agriculturally active compounds such as insecticides or pesticides for subsequent release applications of these ingredients. The resulting extruded materials can be granulated or worked to fine powders.

The following examples are provided to further explain and exemplify the invention but not to limit the scope thereof, which scope is defined by the appended claims.

Example 1

(a) 5000 g of potato starch containing 14.87 % water were placed in a high speed mixer and 485 g of water were added under stirring. To the above mixture of starch and water, 425 g of polyvinyl alcohol-co-vinyl acetate, (component b)) containing 11 % - 13 % of the monomeric units as vinyl acetate and 87 % - 89 % of the monomeric units as vinyl alcohol sold as Airvol 540S by Air Products; and 42 g of polyethylene-co-vinyl acetate (component c)) containing 80 % of the monomeric units as ethylene and 20 % of the monomeric units as vinyl acetate sold as Escorene UL02020 by Exxon; 42.5 g of hydrogenated fat (lubricant/release agent) sold as Boeson VP by Boehringer Ingelheim; 21.25 g of a melt flow accelerator (lecithin) sold as Metarin P by Lucas Meyer and 21.25 g of titanium dioxide (pigment and solid mixture flow accelerator) were added under stirring. The water content of the final mixture was 19.98 %.

(b) 5000 g of the mixture prepared under (a) were fed through a hopper into a Leistritz Single Screw Lab Extruder LSM 30 having a temperature profile of 55°C/ 145°C/ 165°C/ 165°C. The screw speed was 50 rpm. The output of extrudate was 124 g/min.

The extrudate was cut into granulates and stored for further processing.

(c) For further processing the granulates were conditioned to a water content of 17 % by adding water under stirring in a conventional mixer. The obtained material was then fed through a hopper to a Kloeckner-Ferromatic FM 60 injection-molding machine, for the production of tensile test pieces. The temperature profile was 90°C/ 155°C/ 155°C/ 155°C, the screw speed: 180 rpm, the shot weight 8.2 g, the residence time 450 sec., the injection pressure 1800 bar, the back pressure 30 bar.

All tensile test pieces were conditioned in a climatic cabinet at 50 % R.H. for five days as an arbitrary standard condition.

The test pieces were of standard DIN design (DIN No. 53455).

(d) The conditioned tensile test pieces were then tested for their stress/strain behaviour on an Instron tensile test apparatus, each test with 4 pieces.

The samples were measured at room temperature using an extension rate of 10 mm per minute. Results are presented in Table 1 and compared with those obtained with tensile test pieces obtained from the same starch processed in a similar way but in absence of components b) and c). It can be seen from the results that the Young's modulus of the ternary blend is decreased from 1.56 to 1.29 showing a softening of the injection molded blend material compared to similar tensile test pieces. produced from unblended starch.

The break stress goes from 32.72 MPa to 37.22 MPa indicating an increase of the strength of the blend. The break strain (elongation at break) going from 15.82 % to 33.33 % and break energy from 194.30 kJ/m² to 415.75 kJ/m² showing a considerable increase in the toughness of the blend material over the unblended one.

<u>Table 1</u>

| | Break Strain (%) | Break Energy (kJ/m$^2$) |
|---|---|---|
| starch (unblended starch) | 15.82 | 194.3 |
| ternary blend Example 1 | 33.33 | 415.75 |

Of course different blend compositions show different values for the physical parameters indicated. To obtain the best values is a matter of optimization by varying the concentration of the different components, which is no problem to the expert in the art.

Example 1 is repeated with the following blends as per the Examples 2 to 10 whereby analogous results as given in Table 1 are obtained.

Example 2

Example 1 is repeated except that the ratio of the components is varied as given in Table 2. For comparison perspective, Example 1 is shown as Blend No. 1.

Table 2

| Blend No. | starch: component b)+c) (weight ratio) | component b): component c) (weight ratio) |
|-----------|------------------------------------------|-------------------------------------------|
| 2 | 50 : 50 | 100 : 0 |
| 3 | 60 : 40 | 99 : 1 |
| 4 | 70 : 30 | 50 : 1 |
| 5 | 80 : 20 | 20 : 1 |
| Ex.1 | 91.5 : 8.5 | 10 : 1 |
| 6 | 90 : 10 | 1 : 1 |
| 7 | 94 : 6 | 1 : 10 |
| 8 | 98 : 2 | 1 : 50 |
| 9 | 99 : 1 | 1 : 99 |

The resulting injection molded polymers are tougher and more resistant to humid air than the unmodified starch polymer. The toughness as judged by resistance to breaking upon bending increases from blend 9 to blend 2 in concert with the combined increase in vinyl alcohol content. While the resistance to softening in humid atmosphere is improved in all cases relative to unmodified starch, the resistance of blends 1,4,5 and 6 are particularly good. These results illustrate the unexpected combinations as benefits in performance.

Example 3

Example 1 is repeated by replacing component (b) (polyvinyl alcohol-co-vinyl acetate) by poly(hydroxyethyl methacrylate) (HEMA). Component (c) (polyethylene-co-vinyl acetate) is replaced by polymethyl methacrylate.

The resulting injection molded polymer is tougher and more resistant to humid than unmodified starch polymer.

Example 4

Example 1 is repeated by replacing component (b) (polyvinyl alcohol-co-vinyl acetate) by poly(hydroxyethyl methacrylate) (HEMA). Polyethylene-co-vinyl acetate (86 % ethylene, 14 % vinyl acetate) is used as component (c). The resulting injection molded polymer is tougher and more resistant to humid air than unmodified starch polymer.

Example 5

Example 1 is repeated by increasing component b) to 850 g and replacing component c) by 85 g of polystyrene. The resulting injection molded polymer is tougher and more resistant to humid air than unmodified starch polymer.

## Example 6

Example 1 is repeated by increasing component b) to 1700 g and replacing component c) by 42 g of polyvinyl chloride-co-vinyl acetate (91 % vinyl chloride - 9 % vinyl acetate). The resulting injection molded polymer is tougher and more resistant to humid air than unmodified starch polymer.

## Example 7

Example 1 is repeated by replacing component (b) polyvinyl alcohol-co-vinyl butyral (40 % vinyl alcohol, 60 % vinyl butyral). Component (c) is replaced by 42 g polyvinyl butyral. The resulting injection molded polymer is tougher and more resistant to humid air than unmodified starch polymer.

## Example 8

Example 1 is repeated by increasing component b) to 3400 g and replacing component b) by 38 g polypropylene. The resulting injection molded polymer is tougher and more resistant to humid air than unmodified starch polymer.

## Example 9

(a) 9500 g of potato starch containing 15.1 % water were placed in a high speed mixer and 425 g of polyvinyl alcohol-co-vinyl acetate (component b) sold as Airvol 540S by Air Products and containing 11 - 13 % of the monomeric units as vinyl acetate and 87 - 89 % of the monomeric units as vinyl alcohol. 80.75 g of hydrogenated fat (lubricant release agent) sold as Boeson VP by Boehringer Ingelheim, 40.37 g of a melt flow accelerator (lecithin) sold as Metarin P by Lucas Meyer were added under stirring. The water content of the final mixture was 14.43 %.

(b) 10,000g of the mixture prepared under (a) were fed through a hopper into a Werner & Pfleiderer co-rotating twin screw extruder (model Continua 37).

The temperature profile of the four sections of the barrel was respectively 20°C/ 180°C/ 180°C/ 80°C.

Extrusion was carried out with a mixture output of 8 kg/hr (screw speed 200 rpm). Water was added at the inlet with a flow rate of 2 kgs/hr. The water content of the material during extrusion was therefore 31.5 %. In the last section of the extruder 80 mbar reduced pressure was applied to remove part of the water as water vapour.

The water content of the granulates was 17.15 % as measured after they had equilibrated at room temperature.

(c) The granulates of the pre-blended mixture as obtained under (b) ($H_2O$ content: 17.5 %) were fed through a hopper to an injection molding machine Arburg 329-210-750 for the production of tensile test pieces. The temperature profile of the barrel was: 90°C/ 165°C/ 165°C/ 165°C.

The shot weight was 8g, the residence time 450 sec., the injection pressure 2082 bar, the back pressure 80 bar, the screw speed 180 rpm.

The tensile test pieces thus produced were conditioned in a climatic cabinet at 50 % R.H. for five days as an arbitrary standard condition.

The test pieces were of standard DIN design (DIN No. 53455).

(d) The conditioned tensile test pieces were then tested for their stress/strain behaviour on a Zwick tensile test apparatus.

The samples were measured at room temperature using an extension rate of 10 mm per minute. Results are presented in Table 3 and compared with those obtained with tensile test pieces obtained from the same starch processed in a similar way but in absence of components b) and c).

Table 3

| | unblended starch | Example Nos. | | | | | | | | |
|---|---|---|---|---|---|---|---|---|---|---|
| | | 9 | 10 | 11 | 12 | 13 | 14 | 15 | 16 | 17 |
| break strain % | 22 | 38.5 | 56 | 26 | 33 | 37 | 27 | 43 | 55 | 43 |
| break energy KJ/m$^2$ | 325 | 506 | 900 | 338 | 444 | 520 | 315 | 499 | 687 | 500 |

Example 10

(a) 8000 g of potato starch containing 15 % water were placed in a high speed mixer and 2720 g of polyvinyl alcohol-co-vinyl acetate (component b) sold as Airvol 540S by Air Products and containing 11 - 13 % of the monomeric units as vinyl acetate and 87 - 89 % of the monomeric units as vinyl alcohol; 68 g of hydrogenated fat (lubricant release agent) sold as Boeson VP by Boehringer Ingelheim, 34 g of a melt flow accelerator (lecithin) sold as Metarin P by Lucas Meyer were added under stirring. The water content of the final mixture was 15.6 %.

(b) 10,000g of the mixture prepared under (a) were fed through a hopper into a Werner & Pfleiderer co-rotating twin screw extruder (model Continua 37).

The temperature profile of the four sections of the barrel was respectively 20°C/ 50°C/ 100°C/ 50°C. Extrusion was carried out with a mixture output of 8 kg/hr (screw speed 200 rpm). Water was added at the inlet with a flow rate of 1 kg/hr. The water content of the material during extrusion was therefore 25 %. In the last section of the extruder 22 mbar reduced pressure was applied to remove part of the water as water vapour.

The water content of the granulates was 14.8 % as measured after they had equilibrated at room temperature. They were brought to a water content of 17 % by spraying water under stirring in a conventional mixer.

(c) The granulates of the pre-blended mixture as obtained under (b) ($H_2O$ content: 17 %) were fed through a hopper to an injection molding machine Arburg 329-210-750 for the production of tensile test pieces. The temperature profile of the barrel was: 90°C/ 185°C/ 185°C/ 185°C.

The shot weight was 7.9 g, the residence time 450 sec., the injection pressure 2200 bar, the back pressure 80 bar, the screw speed 180 rpm.

The tensile test pieces thus produced were conditioned in a climatic cabinet at 50 % R.H. for five days as an arbitrary standard condition to equilibrate them at a water content of about 14 %.

The test pieces were of standard DIN design (DIN No. 53455).

(d) The conditioned tensile test pieces were then tested for their stress/strain behaviour on a Zwick tensile test apparatus as given in Example 9.

Example 11

(a) 8900 g of potato starch containing 15.1 % water were placed in a high speed mixer and 765 g of polyvinyl alcohol-co-vinyl acetate (component b) sold as Airvol 540S by Air Products (containing 11 - 13 mole % vinyl acetate and 87 - 89 mole % vinyl alcohol). 85 g polyethylene-co-vinyl acetate (component c)) containing 20 mole % vinyl acetate and 80 mole % ethylene) sold as Escorene U102020 by Exxon; 85 g polyethylene (component c)) sold as Lupolen 2410T by BASF. 75.65 g of hydrogenated fat (lubricant/release agent) Boeson VP and 37.82 g of a melt flow accelerator (lecithin/Metarin P) were added under stirring. The water content of the final mixture was 13.5 %.

(b) 9000 g of the mixture prepared under (a) were fed through a hopper into the same twin-screw co-rotating extruder described in Example 9. The extrusion of the mixture was carried out with the same temperature profile: 20°C/ 180°C/180°C/ 80°C. The other parameters of the extrusion experiment were the following:

| | |
|---|---|
| material output: | 9 kg/hr |
| screw speed: | 200 rpm |
| water added: | 2 kg/hr |
| reduced pressure (last section) | 300 mbar |
| water-content during extrusion: | 29.2 % |

The water content of the granulates was 17.12 % as measured after they had equilibrated at room temperature.

(c) The granulates obtained under (b) were processed using the same injection molding machine described in (c) of Example 9. The temperature profile of the barrel was 90°C/ 165°C/ 165°C/ 165°C. The other processing parameters were:

| | |
|---|---|
| shot weight: | 8 g |
| residence time: | 450 sec. |
| injection pressure; | 1825 bar |
| back pressure: | 80 bar |
| screw speed: | 180 rpm |

The tensile test pieces thus produced were conditioned and tested on a Zwick tensile test apparatus as described in (d) of Example 9.

Results are presented in Table 3.

Example 12

(a) 8900 g of potato starch containing 15.5 % water were placed in a high speed mixer and 765 g of polyvinyl alcohol-co-vinyl acetate (component b) containing 11 - 14 mole % vinyl alcohol and 87 - 89 mole % vinyl acetate; 170 g of polyamide-block-polyether (component c) sold as Pebax MA-4011 by Atochem; 75.65 g of hydrogenated fat (lubricant/ release agent) Boeson VP; 37.82 g of a melt flow accelerator (lecithin) Metarin P were added under stirring. The water content of the final mixture was 13.4 %.

(b) 9000 g of the mixture prepared under (a) were fed through a hopper into the same twin-screw co-rotating extruder described in Example 9.

The extrusion of the mixture was carried out with the following processing parameters:

| | |
|---|---|
| temperature profile: | 20°C/ 220°C/ 220°C/ 80°C |
| material output: | 8 kg/hr |
| screw speed: | 200 rpm |
| water added: | 2 kg/hr |
| reduced pressure (last section): | 150 mbar |
| water content during extrusion: | 29.14 % |

The water content of the granulates was 17.20 % after they had equilibrated at room temperature.

(c) The granulates of (b) were processed using the same injection molding machine of Example 9. The processing parameters were the following:

| | |
|---|---|
| temperature profile: | 90°C/ 165°C/ 165°C/ 165°C |
| shot weight: | 8 g |
| residence time; | 450 sec |
| injection molding: | 2220 bar |
| back pressure; | 80 bar |
| screw speed: | 180 rpm |

The tensile test pieces thus produced were conditioned and tested on a Zwick tensile test apparatus described in (d) of Example 9.

Results are presented in Table 3.

### Example 13

(a) 8900 g of potato starch containing 15.1 % water were placed in a high speed mixer and 765 g of polyvinyl alcohol-co-vinyl acetate (component b) Airvol 540S and containing 11 - 13 mole % of vinyl alcohol and 87 - 89 mole % vinyl acetate; 170 g of a thermoplastic elastomer polyurethane block polyether (component c) sold as Pellethane 2103-80-AE by Dow Chemical Company; 75.65 g of hydrogenated fat (lubricant/ release agent) Boeson VP; 37.82 g of a melt flow accelerator (lecithin) Metarin P were added under stirring. The water content of the final mixture was 13.5 %.

(b) 9000 g of the mixture prepared under (a) were fed through a hopper into the same twin-screw co-rotating extruder described in Example 9.

The extrusion of the mixture was carried out with the following processing temperature:

| | |
|---|---|
| temperature profile: | 20°C/ 220°C/ 220°C/ 80°C |
| material output: | 8 kg/hr |
| screw speed: | 200 rpm |
| water added: | 2 kg/hr |
| reduced pressure (last section): | 80 mbar |
| water content during extrusion: | 29.2 % |

The water content of the granulates was 16.9 % after they had equilibrated at room temperature.

(c) The granulates obtained under (b) were processed using the same injection molding machine described in (c) of Example 9. The processing parameters were the following:

| | |
|---|---|
| temperature profile: | 90°C/ 165°C/ 165°C/ 165°C |
| shot weight: | 8 g |
| residence time; | 450 sec |
| injection molding: | 2220 bar |
| back pressure; | 80 bar |
| screw speed: | 180 rpm |

The tensile test pieces thus produced were conditioned and tested on a Zwick tensile test apparatus described in (d) of Example 9.

Results are presented in Table 3.

### Example 14

(a) 8000 g of potato starch containing 15.1 % water were placed in a high speed mixer and 340 g of polyvinyl alcohol-co-vinyl acetate, Airvol 540S (component b) containing 11 - 13 mole % of vinyl alcohol and 87 - 89 mole % vinyl acetate; 680 g of polyamide block polyether thermoplastic elastomer (component c) sold as Pebax MA-4011 by Atochem; 680 g of polyurethane-block-polyether thermoplastic elastomer (component c) sold as Pellethane 2103-80-AE by Dow Chemical Company; 68 g of hydrogenated fat (lubricant/ release agent) Boeson VP; 34 g of a melt flow accelerator (lecithin) Metarin P were added under stirring. The water content of the final mixture was 12.3 %.

(b) 9000 g of the mixture prepared under (a) were fed through a hopper into the same twin-screw co-rotating extruder described in Example 9.

The extrusion of the mixture was carried out with the following processing parameters:

| | |
|---|---|
| temperature profile: | 20°C/ 220°C/ 220°C/ 80°C |
| material output: | 8 kg/hr |
| screw speed: | 200 rpm |
| water added: | 2.1 kg/hr |
| reduced pressure (last section): | 600 mbar |
| water content during extrusion: | 27.7 % |

The water content of the granulates was 16.8 % after they had equilibrated at room temperature.

(c) The granulates obtained under (b) were processed using the same injection molding machine described in (c) of Example 9. The processing parameters were the following:

| | |
|---|---|
| temperature profile: | 90°C/ 165°C/ 165°C/ 165°C |
| shot weight: | 8 g |
| residence time; | 450 sec |
| injection molding: | 1650 bar |
| back pressure; | 80 bar |
| screw speed: | 180 rpm |

The tensile test pieces thus produced were conditioned and tested on a Zwick tensile test apparatus described in (d) of Example 9.

Results are presented in Table 3.

## Example 15

Example 14 was repeated with the differences that (i) potato starch was decreased to 5000 g, (ii) polyvinyl alcohol-co-vinyl acetate (Airvol 540S) was increased to 1770 g, (iii) polyamide (Pebax-4011) was decreased to 531 g and (iv) the polyurethane (Pellethane 2103-80-AE) was decreased to 531 g.

Results are given in Table 3.

## Example 16

(a) 7000 g of potato starch containing 15.0 % water were placed in a high speed mixer and 1700 g of polyvinyl alcohol-co-vinyl acetate (component b) Airvol 540S (component b) containing 11 - 13 mole % of vinyl acetate and 87 - 89 mole % vinyl alcohol (Airvol 540S); 425 g of a thermoplastic elastomer polyamide-block-polyether Pebax Ma-4011 of Atochem; 425 g of thermoplastic elastomer polyurethane-block-polyether Pellethane 2103-80-AE by Dow Chemical Company; 59.5 g of hydrogenated fat (lubricant/ release agent) Boeson VP; 29.75 g of a melt flow accelerator (lecithin) Metarin P were added under stirring. The water content of the final mixture was 11 %.

(b) 9000 g of the mixture prepared under (a) were fed through a hopper into the same twin-screw co-rotating extruder described in Example 9.

The extrusion of the mixture was carried out with the following processing parameters:

| | |
|---|---|
| temperature profile: | 20°C/ 220°C/ 220°C/ 80°C |
| material output: | 8 kg/hr |
| screw speed: | 200 rpm |
| water added: | 2.1 kg/hr |
| reduced pressure (last section): | 600 mbar |
| water content during extrusion: | 26.8 % |

The water content of the granulates was 16.8 % after they had equilibrated at room temperature.

(c) The granulates obtained under (b) were processed using the same injection molding machine described in (c) of Example 9. The processing parameters were the following:

| | |
|---|---|
| temperature profile: | 90°C/ 165°C/ 165°C/ 165°C |
| shot weight: | 8 g |
| residence time; | 450 sec |
| injection molding: | 2280 bar |
| back pressure; | 80 bar |
| screw speed: | 180 rpm |

The tensile test pieces thus produced were conditioned and tested on a Zwick tensile test apparatus described in (d) of Example 9.

Results are presented in Table 3.

## Example 17

(a) 5000 g of potato starch containing 15.0 % water were placed in a high speed mixer and 708 g of polyvinyl alcohol-co-vinyl acetate, Airvol 540S (component b) containing 11 - 13 mole % of vinyl alcohol and 87 - 89 mole % vinyl acetate (Airvol 540S); 2125 g of a polyethylene-co-vinyl alcohol EVAL EP-L-101 (component c)) containing 73 mole % vinyl alcohol and 27 mole % ethylene; 42.5 g of hydrogenated fat (lubricant/ release agent) Boeson VP; 21.3 g of a melt flow accelerator (lecithin) Metarin P were added under stirring. The water content of the final mixture was 9.8 %.

(b) 9000 g of the mixture prepared under (a) were fed through a hopper into the same twin-screw co-rotating extruder described in Example 9.

The extrusion of the mixture was carried out with the following processing parameters:

| | |
|---|---|
| temperature profile: | 20°C/ 80°C/ 220°C/ 180°C |
| material output: | 8 kg/hr |
| screw speed: | 200 rpm |
| water added: | 2.1 kg/hr |
| reduced pressure (last section): | 33 mbar |
| water content during extrusion: | 28.7 % |

The granulates were brought to a water content of 17 % by spraying water under stirring in a conventional mixer.

(c) The granulates obtained under (b) were processed using the same injection molding machine described in (c) of Example 9. The processing parameters were the following:

temperature profile:     90°C/ 175°C/ 175°C/ 175°C
shot weight:             7.6 g
residence time;          450 sec
injection molding:       2020 bar
back pressure;           80 bar
screw speed:             180 rpm

The tensile test pieces thus produced were conditioned and tested on a Zwick tensile test apparatus described in (d) of Example 9.

Results are given in Table 3.

## Example 18

Example 1 (Sections a) and b)) is repeated except that the water content is adjusted to 22 %, and the cutter is removed from the die face. A continuous extrudate is obtained which is foamed as a result of the excess water evaporation. The foam is chopped into 30-40 mm lengths and is useful as a loose-fill, packaging insulation material.

## Example 19

During each of the injection molding operations in Examples 2 - 14 an experiment is performed to demonstrate the utility of making foams. The molten material was obtained as described in Example 1, Sections a), b) and c) in each case was extruded into the open atmosphere (Section c) instead of being injection molded into a closed mold. In every case the material is converted into a foamed extrudate useful for loose-fill in packaging applications.

## Example 20

The granulates from Example 1 are mixed with polystyrene in the proposition of 30 to 70 parts by weight and are treated according to Example 18 The resulting foamed extrudate contains a very fine and uniform all structure suitable for a variety of uses including structural foam.

## Claims

1.  A composition consisting of

    a) destructurized starch produced by heating a starch having a water content of 5 to 40% by weight based on the starch/water component, in a closed volume under shear; and at a temperature of 120°C to 190°C above the glass transition and the melting points of its components and at a pressure of up to $150 \times 10^5$ N/m$^2$ to form a melt whereby the pressure corresponds at a minimum to the vapour pressure of water at the temperature used and heating the melt for a time long enough to obtain a melting of the molecular structure of the starch granules and a homogenization of the melt;

    b) at least one copolymer selected from the group consisting of poly(vinyl alcohol-co-vinyl acetate), ethylene/vinyl alcohol/vinyl acetate copolymers, ethylene/vinyl chloride/vinyl alcohol/vinyl acetate graft copolymers, vinyl alcohol/vinyl acetate/vinyl chloride copolymers, vinyl alcohol/vinyl acetate/vinyl chloride/diacryl amide copolymers, vinyl alcohol/ vinyl butyral copolymers, vinyl alcohol/vinyl acetate/vinyl pyrrolidone copolymers wherein the vinylalcohol units are present in an amount of 20 mol% to 99 mol%;

    c) a thermoplastic polymer which undergoes melt formation at a set processing temperature within the range of 95°C to 190°C and is selected from (i) the group consisting of polyethylenes, polypropylenes, polyisobutylenes, polystyrenes, polyacrylonitriles, poly(vinylcarbazols), polyacrylates, polymethacrylates, poly(vinyl chloride), poly(vinyl acetate), polyamides, thermoplastic polyesters, thermoplastic polyurethanes, polycarbonates, poly(alkylene terephthalates), or (ii) the group consisting of ethylene vinyl acetate copolymers, ethylene/vinyl alcohol copolymers, ethylene/acrylic acid copolymers, ethylene/ethyl acrylate copolymers, ethylene/methacrylate copolymers, ABS-copolymers, styrene/acrylonitrile copolymers, ethylene/maleic acid anhydride copolymers and mixtures thereof; and

d) optionally one or more materials selected from the group consisting of fillers, lubricants, mold release agents, plasticizers, foaming agents, stabilizers, flow accelerators, coloring agents, pigments and mixtures thereof;

wherein the component b) is present in an amount of 1% to 50% by weight of the total composition; and wherein the sum of the components b) and c) constitutes 10% to 80% by weight of the total composition.

2. The composition according to claim 1 wherein the polymer of component b) is a poly(vinyl alcohol-co-vinyl acetate) or a ethylene/vinyl alcohol/vinyl acetate copolymer, containing 30 mol% to 99 mol% hydroxyl containing units.

3. The composition according to the claims 1 or 2 wherein the component b) is present in an amount of 1% to 30% by weight of the total composition.

4. The composition according to any one of the claims 1 to 3 wherein the sum of the components b) and c) constitute 10% to 50% by weight of the total composition.

5. The composition according to any one of the claims 1 to 4 wherein the polymer of component c) absorbs water at a rate of less than 10% per 100 grams of the polymer at room temperature.

6. The composition according to any one of the claims 1 to 4 wherein the polymer of component c) absorbs water at a rate of less than 5% per 100 grams of the polymer at room temperature.

7. The composition according to any one of the claims 1 to 6 wherein the water content is from 5% to 30% by weight of the starch/water component.

8. The composition according to any one of the claims 1 to 6 wherein the water content is from 10% to 22% by weight of the starch/water component.

9. The composition according to any one of the claims 1 to 8 in the form of a melt.

10. The composition according to any one of the claims 1 to 9 in a solidified form.

11. The composition according to claim 10 in particulate, granulated or pelletized form.

12. The composition according to any one of the claims 1 to 10 in the form of a shaped article selected from the group consisting of containers, bottles, pipes, rods, packing materials, sheets, foams, films,sacks, bags and pharmaceutical capsules.

13. The composition according to claim 11 further melted and processed to form a shaped article selected from the group consisting of containers, bottles, pipes, rods, packing materials, sheets, foams, films, sacks, bags and pharmaceutical capsules.

14. The shaped articles according to claim 12 and claim 13 wherein the shaping process comprises foaming, filming, compression molding, injection molding, blow molding, extruding, co-extruding, vacuum forming, thermoforming and combinations thereof.

15. A thermoplastic destructurized starch product formed by the process comprising:
1) providing a mixture consisting of:
- a starch composed mainly of amylose and /or amylopectin and having a water content of from 5% to 40% by weight;
- at least one polymer as defined in claim 1 as component b);
- a thermoplastic polymer as defined in claim 1 as component c);
wherein the component b) is present in an amount of 1% to 50% by weight of the total composition; and wherein the sum of the components b) and c) constitutes 10% to 80% by weight of the total composition;
2) heating said mixture in the screw and barrel of an injection molding machine or an extruder at a temperature of 120°C to 190°C and at a pressure of up to $150 \times 10^5$ N/m$^2$ to form a melt and heating the melt for a time long enough to obtain a destructurization of the starch and a homogenization of the melt ;
3) shaping the melt into an article; and

4) allowing the shaped article to cool to a solidified dimensionally stable article.

16. The product according to claim 15 wherein the heating temperature in step 2) is from 130°C to 190°C.

17. The product according to claim 15 in particulate, granulated or palletized form.

18. The product according to claim 15 in the form of a shaped article selected from the group consisting of containers, bottles, pipes, rods, packing materials, sheets, foams, films,sacks, bags and pharmaceutical capsules.

19. The product according to claim 17 further melted and processed to form a shaped article selected from the group consisting of containers, bottles, pipes, rods, packing materials, sheets, foams, films, sacks, bags and pharmaceutical capsules.

**Patentansprüche**

1. Eine Zusammensetzung bestehend aus:
   a) destrukturierter Stärke hergestellt mittels Erwärmen einer Stärke mit einem Wassergehalt von 5 bis 40 Gewichts- %, bezogen auf den Stärke/Wasser - Bestandteil, in einem geschlossenen Volumen unter Scherung; und bei einer Temperatur von 120°C bis 190°C oberhalb der Glasübergangs- und der Schmelzpunkte ihrer Bestandteile und bei einem Druck von bis zu $150 \times 10^5$ N/m², um eine Schmelze zu bilden, wobei der Druck mindestens dem Wasserdampfdruck bei den verwendeten Temperaturen entspricht und unter genügend langem Erwärmen der Schmelze, um eine Schmelzung der Molekularstruktur der Stärkegranulate und eine Homogenisierung der Schmelze zu erlangen;
   b) mindestens ein Copolymer ausgewählt von der Gruppe umfassend Poly(vinylalkohol-co-vinylacetat); Äthylen/ Vinylalkohol/ Vinylacetat Copolymere; Äthylen/ Vinylchlorid/ Vinylalkohol/ Vinylacetat Graft Copolymere; Vinylalkohol/ Vinylacetat/ Vinylchlorid Copolymere; Vinylalkohol/ Vinylacetat/ Vinylchlorid/ Diacrylamid Copolymere; Vinylalkohol/ Vinylbutyral Copolymere; Vinylalkohol/ Vinylacetat/ Vinylpyrrolidon Copolymere, wobei die Vinylalkoholeinheiten in einer Menge von 20 Mol% bis 99 Mol% anwesend sind;
   c) ein thermoplastisches Polymer, welches eine Schmelzbildung bei einer eingestellten Verfahrenstemperatur im Bereich von 95°C bis 190°C aufweist, und ausgewählt ist von (i) der Gruppe umfassend Polyäthylen, Polypropylen, Polyisobutylen, Polystyrole, Polyacrylnitrile, Poly(vinylcarbazole), Polyacrylate, Polymethacrylate, Poly(vinylchlorid), Poly(vinylacetat), Polyamide, thermoplastische Polyester, thermoplastische Polyurethane, Polycarbonate, Poly(alkylenterephthalate), oder (ii) der Gruppe umfassend Äthylen-Vinylacetat Copolymere, Äthylen/ Vinylalkohol Copolymere, Äthylen/ Acrylsäure Copolymere, Äthylen/ Äthylacrylat Copolymere, Äthylen/ Methacrylat Copolymere, ABS - Copolymere, Styrol/ Acrylnitril Copolymere, Äthylen/ Maleinsäureanhydrid Copolymere und deren Mischungen; und
   d) gegebenenfalls ein oder mehrere Stoffe ausgewählt von der Gruppe umfassend Füllstoffe, Gleitmittel, Formtrennmittel, Plastifizierungsmittel, Schäumungsmittel, Stabilisatoren, Fliessmittel, Farbstoffe, Pigmente und deren Mischungen;
   wobei der Bestandteil b) in einer Menge von 1 % bis 50 %, bezogen auf das Gesamtgewicht der Zusammensetzung, anwesend ist; und wobei die Summe der Bestandteile b) und c) 10 % bis 80 %, bezogen auf das Gesamtgewicht der Zusammensetzung, beträgt.

2. Die Zusammensetzung nach Anspruch 1, wobei das Polymer des Bestandteils b) ein Poly(vinylalkohol-co-vinylacetat) oder ein Äthylen/ Vinylalkohol/ Vinylacetat Copolymer ist, welches 30 Mol% bis 99 Mol% hydroxylenthaltende Einheiten enthält.

3. Die Zusammensetzung nach Anspruch 1 oder 2, wobei der Bestandteil b) in einer Menge von 1 % bis 30 %, bezogen auf das Gesamtgewicht der Zusammensetzung, anwesend ist.

4. Die Zusammensetzung nach einem der vorhergehenden Ansprüche 1 bis 3, wobei die Summe der Bestandteile b) und c) 10 bis 50 %, bezogen auf das Gesamtgewicht der Zusammensetzung, beträgt.

5. Die Zusammensetzung nach einem der vorhergehenden Ansprüche 1 bis 4, wobei das Polymer des Bestandteils c) bei Zimmertemperatur Wasser in einer Menge von weniger als 10 % pro 100 Gramm Polymer absorbiert.

6. Die Zusammensetzung nach einem der vorhergehenden Ansprüche 1 bis 4, wobei das Polymer des Bestandteils c) bei Zimmertemperatur Wasser in einer Menge von weniger als 5 % pro 100 Gramm Polymer absorbiert.

7. Die Zusammensetzung nach einem der vorhergehenden Ansprüche 1 bis 6, wobei der Wassergehalt zwischen 5 % und 30%, bezogen auf das Gewicht des Stärke/Wasser - Bestandteils, liegt.

8. Die Zusammensetzung nach einem der vorhergehenden Ansprüche 1 bis 6, wobei der Wassergehalt zwischen 10 % und 22%, bezogen auf das Gewicht des Stärke/Wasser - Bestandteils, liegt.

9. Die Zusammensetzung nach einem der vorhergehenden Ansprüche 1 bis 8 in Form einer Schmelze.

10. Die Zusammensetzung nach einem der vorhergehenden Ansprüche 1 bis 9 in fester Form.

11. Die Zusammensetzung nach Anspruch 10 in körniger, granulierter oder tablettierter Form.

12. Die Zusammensetzung nach einem der vorhergehenden Ansprüche 1 bis 10 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

13. Die Zusammensetzung nach Anspruch 11 weiter geschmolzen und verarbeitet, um einen geformten Gegenstand zu bilden, ausgewählt von der Gruppe umfassend Behälter, Flaschen, Rohre, Stäbe, Verpackungsmaterialien, Folien, Schäume, Filme, Säcke, Beutel und pharmazeutische Kapseln.

14. Die geformten Gegenstände nach Anspruch 12 und Anspruch 13, wobei der Formungsvorgang Schäumen, Filmen, Pressformen, Spritzgiessen, Blasformen, Extrudieren, Coextrudieren, Vakuumformen, Thermoformen und deren Kombinationen umfasst.

15. Ein Produkt aus thermoplastischer destrukturierten Stärke geformt durch das Verfahren umfassend:
    1) Vorlegen einer Mischung umfassend:
        - eine Stärke, hauptsächlich bestehend aus Amylose und/ oder Amylopektin mit einem Wassergehalt von 5 bis 40 Gewichts-%;
        - mindestens ein Polymer, wie in Anspruch 1 als Bestandteil b) definiert;
        - ein thermoplastisches Polymer, wie in Anspruch 1 als Bestandteil c) definiert;
    wobei der Bestandteil b) in einer Menge von 1 % bis 50 %, bezogen auf das Gesamtgewicht der Zusammensetzung, anwesend ist; und wobei die Summe der Bestandteile b) und c) 10 % bis 80 %, bezogen auf das Gesamtgewicht der Zusammensetzung, beträgt;
    2) Erwärmen der besagten Mischung in der Schnecke und der Trommel einer Spritzgiessvorrichtung oder einer Extrudiervorrichtung bei einer Temperatur von 120°C bis 190°C und bei einem Druck von bis zu $150 \times 10^5$ N/m², um eine Schmelze zu bilden und genügend langes Erwärmen, um eine Destrukturierung der Stärke und eine Homogenisierung der Schmelze zu erreichen;
    3) Formen der Schmelze zu einem Gegenstand; und
    4) Abkühlen lassen des geformten Gegenstands zu einem erstarrten dimensionsstabilen Gegenstand.

16. Das Produkt nach Anspruch 15, wobei die Erwärmungs- temperatur in Stufe 2) zwischen 130°C und 190°C liegt.

17. Das Produkt nach Anspruch 15 in körniger, granulierter oder tablettierter Form.

18. Das Produkt nach Anspruch 15 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

19. Das Produkt nach Anspruch 17 weiter geschmolzen und verarbeitet, um einen geformten Gegenstand zu formen, ausgewählt von der Gruppe umfassend Behälter, Flaschen, Rohre, Stäbe, Verpackungsmaterialien, Folien, Schäume, Filme, Säcke, Beutel und pharmazeutische Kapseln.

## Revendications

1. Une composition comprenant

a) de l'amidon déstructuré produit par le chauffage d'un amidon ayant une teneur en eau de 5 à 40% en poids, par rapport au constituant amidon/eau, dans un volume clos sous action de cisaillement; et à une température de 120°C à 190°C au-dessus des points de transition vitreuse et de fusion de ses constituants et à une pression allant jusqu'à 150 x 10$^5$ N/m$^2$ pour former une masse fondue, laquelle pression correspond au minimum à la pression de vapeur de l'eau à la température employée et chauffage de la masse fondue pendant un temps assez long afin d'obtenir une fusion de la structure moléculaire des granules d'amidon et une homogénéisation de la masse fondue;

b) au moins un copolymère choisi dans le groupe comprenant poly(vinylalcool-co-vinylacétate), éthylène/ vinylalcool/ vinylacétate copolymères, éthylène/ chlorures de vinyle/ vinylalcool/ vinylacétate copolymères greffés, vinylalcool/ vinylacétate/ chlorure de vinyle copolymères, vinylalcool/ vinylacétate/ chlorure de vinyle/ diacrylamide copolymères, vinylalcool/ vinylbutyrale copolymères, vinylalcool/ vinylacétate/ vinylpyrrolidone copolymères, caractérisé en ce que les unités de vinylalcool sont présentes dans une quantité de 20 mol% à 99 mol%;

c) un polymère thermoplastique qui subit une formation d'une masse fondue à une température de procédé réglée entre 95°C et 190°C, et choisi dans (i) le groupe comprenant polyéthylènes, polypropylènes, polyisobutylènes, polystyrènes, polyacrylonitriles, poly(vinyle carbazoles), polyacrylates, polyméthacrylates, poly(vinylchlorure), poly(vinylacétate), polyamides, polyesters thermoplastiques, polyuréthannes thermoplastiques, polycarbonates, poly(alkylène téréphtalates), ou (ii) du groupe contenant éthylène vinylacétate copolymères, éthylène/ vinylalcool copolymères, éthylène/ acide acrylique copolymères, éthylène/ éthylacrylate copolymères, éthylène/ méthacrylate copolymères, ABS-copolymères, styrène/ acrylonitrile copolymères, éthylène/ acide anhydride maléïque copolymères et leurs mélanges; et

d) en option une ou plusieurs matières choisies dans le groupe comprenant des charges minérales (fillers), des lubrifiants, des agents de démoulage, des plastifiants, des agents moussants, des stabilisateurs, des accélérateurs de coulée, des colorants, des pigments et leurs mélanges;

caractérisée en ce que le constituant b) est présent dans une quantité de 1% à 50%, par rapport au poids total de la composition; et en ce que la somme des constituants b) et c) constitue de 10% à 80%, par rapport au poids total de la composition.

2. La composition selon la revendication 1, caractérisée en ce que le constituant b) est un poly(vinylalcool-co-vinylacétat) ou un éthylène/ vinylalcool/ vinylacétate copolymère contenant 30 mol% à 99 mol% d'unités contenant de l'hydroxyle.

3. La composition selon la revendication 1 ou 2, caractérisée en ce que le constituant b) est présent en une quantité de 1% à 30%, par rapport au poids total de la composition.

4. La composition selon l'une quelconque des revendications 1 à 3, caractérisée en ce que la somme des constituants b) et c) constitue de 10% à 50%, par rapport au poids total de la composition.

5. La composition selon l'une quelconque des revendications 1 à 4, caractérisée en ce que le polymère du constituant c) absorbe de l'eau à un taux inférieur à 10% par 100 grammes de polymère à température ambiante.

6. La composition selon l'une quelconque des revendications 1 à 4, caractérisée en ce que le polymère du constituant c) absorbe de l'eau à un taux inférieur à 5% par 100 grammes de polymère à température ambiante.

7. La composition selon l'une quelconque des revendications 1 à 6, caractérisée en ce que la teneur en eau est de 5% à 30%, par rapport au poids du constituant amidon/eau.

8. La composition selon l'une quelconque des revendications 1 à 6, caractérisée en ce que la teneur en eau est de 10% à 22%, par rapport au poids du constituant amidon/eau.

9. La composition selon l'une quelconque des revendications 1 à 8 sous forme d'une masse fondue.

10. La composition selon l'une quelconque des revendications 1 à 9 sous forme solide.

11. La composition selon la revendication 10 sous forme de particules, de granules ou de pastilles.

12. La composition selon l'une quelconque des revendications 1 à 10 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

13. La composition selon la revendication 11 fondue à nouveau et traitée pour former un article façonné choisi dans le groupe comprenant des récipients, des bouteilles, des tubes, des tiges, des emballages, des feuilles, des mousses, des films, des sacs, des sachets et des capsules pharmaceutiques.

14. Les articles façonnés selon la revendication 12 et la revendication 13 caractérisés en ce que le procédé de façonnage comprend moussage, extrusion de films, moulage par compression, moulage par injection, moulage par soufflage, extrusion, coextrusion, formage sous vide, thermoformage et leurs combinaisons.

15. Un produit d'amidon thermoplastique déstructuré formé par le procédé comprenant:
    1) fourniture d'un mélange comprenant:
        - un amidon, essentiellement formé d'amylose et/ou d'amylopectine et ayant une teneur en eau entre 5% et 40% en poids;
        - au moins un polymère, comme défini dans la revendication 1, en tant que constituant b);
        - un polymère thermoplastique, comme défini dans la revendication 1, en tant que constituant c);
    caractérisé en ce que le constituant b) est présent dans une quantité de 1% à 50%, par rapport au poids total de la composition; et caractérisé en ce que la somme des constituants b) et c) constitue de 10% à 80%, par rapport au poids total de la composition;
    2) chauffage du dit mélange dans une vis et un fût d'un appareil de moulage par injection ou d'extrusion à une température comprise entre 120°C et 190°C et à une pression allant jusqu'à 150 x $10^5$ N/m² pour former une masse fondue et chauffage de la masse fondue pendant un temps assez long afin d'obtenir une déstructuration de l'amidon et une homogénéisation de la masse fondue;
    3) façonnage de la masse fondue en un article; et
    4) laisser l'article façonné refroidir en un article solide dimentionnellement stable.

16. Le produit selon la revendication 15 caractérisé en ce que la température de chauffage dans l'étape 2) est comprise entre 130°C et 190°C.

17. Le produit selon la revendication 15 sous forme de particules, de granules ou de pastilles.

18. Le produit selon la revendication 15 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

19. Le produit selon la revendication 17 fondu à nouveau et traité pour former un article façonné choisi dans le groupe comprenant des récipients, des bouteilles, des tubes, des tiges, des emballages, des feuilles, des mousses, des films, des sacs, des sachets et des capsules pharmaceutiques.